# EUROPÄISCHE PATENTSCHRIFT

(11) **EP 4 459 168 B1**
(45) Veröffentlichungstag und Bekanntmachung des Hinweises auf die Patenterteilung: **18.03.2026**
(21) Anmeldenummer: 23171013.8
(22) Anmeldetag: 02.05.2023
(51) Int. Cl.: F16L 55/165, B29C 63/28, B29C 63/36, B29C 63/00

(54) **VERFAHREN ZUR BEFESTIGUNG EINES LINERS AN EINEM SCHLAUCH**
METHOD FOR SECURING A LINER TO A HOSE
PROCÉDÉ DE FIXATION D'UN MANCHON SUR UN TUYAU FLEXIBLE

(43) Veröffentlichungstag der Anmeldung: 06.11.2024
(73) Patentinhaber: bodus GmbH, 5070 Frick (CH)
(72) Erfinder: Boller, Daniel, 5064 Wittnau (CH)
(74) Vertreter: Meissner Bolte Partnerschaft mbB

(56) Entgegenhaltungen:
- WO-A1-2016/106448
- US-A- 5 964 249
- US-A1- 2013 098 535
- US-B2- 8 375 972

## Beschreibung

Die Erfindung betrifft ein Verfahren zur Befestigung eines Liners an einem Schlauch, insbesondere an einem Kalibrierschlauch.

Die DE 44 26 151 A1 beschreibt die Auskleidung eines Rohrs mit einem Liner, um das entsprechende Rohr zu sanieren. Dabei wird ein sogenannter Liner, ein flexibler Faserschlauch, in das Rohr, beispielsweise eine Rohrleitung oder einen Abwasserkanal, eingestülpt. Der Faserschlauch ist mit aushärtbarem Harz getränkt und wird an die Innenfläche des zu sanierenden Rohres angelegt.

Unter Linern versteht man harzgetränkte, flexible Faserschläuche, die mittels Umstülpung, auch Inversion genannt, in eine zu sanierende Rohrleitung oder in einen zu sanierenden Abwasserkanal eingeführt und mittels Wärme, UV-Bestrahlung oder durch Umgebungstemperatur zur Aushärtung gebracht werden.

Die Auskleidung der vorgenannten Art wird so gestaltet, dass der harzgetränkter Faserschlauch unter Einbeziehung eines Hilfsschlauches, der Kalibrierschlauch genannt wird, in eine zu sanierende Rohrstrecke hineininversiert (umgekrempelt oder umgestülpt) wird, und dass nach erfolgter Aushärtung des harzgetränkten Faserschlauches der Kalibrierschlauch durch Rückziehen (umgekehrter Inversionsvorgang) wieder entfernt wird und damit die voll ausgeformte und ausgehärtete Auskleidung über die entsprechend gewählte Länge und Querschnitt des Rohres angebracht wird.

Soll das Rohr nur über einen kleinen Bereich saniert werden, werden beispielsweise sogenannte Packer verwendet. Das sind dampfdichte expandierbare Blasen, die in verschiedenen Nennweiten und Anschlusswinkeln erhältlich sind, beispielsweise von Brawo Systems. Diese Firma verkauft passgenaue Spezialpacker mit ca. 35 cm langer, ausstülpbarer Satellitenblase, die mittels eines flexiblen Schiebegestänges eingeführt und positioniert werden können. Nachteil dieser Lösung ist, dass verschiedenste Packer je nach Nennweite des zu sanierenden Rohres benötigt werden, was sehr kostenintensiv ist.

In US 5 964 249 A wird ein Gerät zur Rohrreparatur beschrieben, das ein äußeres Trägerrohr, innerhalb des Trägerrohrs ein inneres Blasenrohr und eine Reparaturhülse innerhalb des Blasenrohrs umfasst. Das Blasenrohr und das Trägerrohr werden durch ein einheitliches Rohr gebildet, das auf sich selbst zurückgefaltet ist. Ein Docht erstreckt sich von der Reparaturhülse bis zum hinteren Ende des Blasenrohrs und ermöglicht die Evakuierung von Gasen aus dem Blasenrohr. Der Blasenschlauch kann aus dem Trägerrohr herausgedreht werden, sodass eine Reparaturmanschette mit einem zu reparierenden Bereich innerhalb eines Abwasserrohrs in Kontakt kommt.

US 8 375 972 B2 offenbart eine Vorrichtung und ein Verfahren zur Verstärkung der Teile einer aufblasbaren Blase, die nicht von einer Auskleidung umgeben sind, während der Erneuerung von Rohrleitungen. Es wird eine Auskleidungs-/Blasen-Baugruppe bereitgestellt, bei der die Auskleidung relativ zur Blase so positioniert ist, dass ein Teil der Blase mit einer größeren Wandstärke über die Enden der Auskleidung hinausragt.

Der Erfindung liegt daher die Aufgabe zu Grunde, ein zu den bekannten Verfahren verbessertes alternatives Verfahren zur Befestigung eines Liners an einem Schlauch und zur Auskleidung, insbesondere Sanierung, eines Rohrs bereitzustellen.

Erfindungsgemäß wird diese Aufgabe im Hinblick auf das Verfahren durch den Gegenstand des Anspruchs 1 gelöst.

Konkret wird die Aufgabe durch ein Verfahren zur Befestigung eines Liners an einem Schlauch, insbesondere Kalibrierschlauch, gelöst, wobei bei dem Verfahren
- ein Schlauch mit einem ersten Ende und einem gegenüberliegenden zweiten Ende bereitgestellt wird;
- eine Markierung auf dem Schlauch angebracht wird;
- das erste Ende über die Außenseite des Schlauchs in Richtung des zweiten Endes oder umgekehrt bis zur Markierung derart umgestülpt wird, dass eine Umstülpungsstelle entsteht;
- ein Liner in den Schlauch eingebracht und an der Umstülpungsstelle angeordnet wird;
- eine Blase in dem Liner im Bereich der Umstülpungsstelle angeordnet und expandiert wird;
- ein Befestigungsmittel an der Umstülpungsstelle zwischen dem Liner und dem Schlauch derart eingebracht wird, dass der Liner am Schlauch gehalten wird; und
- die Blase entfernt und der Schlauch in seine Ausgangsposition zurückgestülpt wird.

Ein wesentlicher Vorteil der Erfindung liegt ferner darin, dass der Liner in dem Schlauch vor der Einbringung in ein zu sanierendes Rohr vorpositioniert und mit dem Schlauch über das Befestigungsmittel verbunden wird. Dies erfolgt durch das Einbringen des Befestigungsmittels zwischen dem Liner und dem Schlauch an der Umstülpungsstelle des Schlauches. Ist der Liner vorpositioniert und wird an dem Schlauch durch das Befestigungsmittel gehalten, wird die Blase herausgezogen und der über die Außenseite des Schlauches gestülpte Schlauchabschnitt wieder zurückgestülpt. Der Liner befindet sich in diesem Zustand vorzugsweise vollständig in dem Schlauch.

Der Schlauch befindet sich im zurückgestülpten Zustand wieder in seiner Ausgangsposition. Die Ausgangsposition entspricht dem Zustand, insbesondere Ausgangszustand, des Schlauches vor und/oder nach dem Umstülpen eines der Enden. Der Schlauch ist in seiner Ausgangsposition vorzugsweise frei von einer Umstülpung des ersten und/oder zweiten Endes.

Bei einer Rohrauskleidung wird der Liner durch Inversion bzw. Umstülpung des Schlauches in das auszukleidende Rohr eingebracht und an entsprechender Stelle platziert. Das erfindungsgemäße Verfahren hat daher den Vorteil, dass auf spezielle Packer, bspw. dampfdichte, expandierbare Blasen, verzichtet werden kann. Des Weiteren sind vorhandene bzw. herkömmliche Kalibrierschläuche und Liner verwendbar. Das erfindungsgemäße Verfahren bringt somit eine große Vereinfachung der Befestigung eines Liners in einem Schlauch sowie der Auskleidung eines Rohres mit sich. Ferner werden dadurch Kosten eingespart.

Zur Bildung der Umstülpungsstelle wird das erste Ende des Schlauches über seine Außenseite in Richtung des zweiten Endes bis zur Markierung gestülpt. Alternativ wird der Schlauch zur Bildung der Umstülpungsstelle in umgekehrter Richtung umgestülpt, nämlich indem das zweite Ende über die Außenseite des Schlauchs in Richtung des ersten Endes bis zur Markierung gestülpt wird. Jedenfalls entspricht dies dem umgestülpten Zustand des Schlauches.

Vorteilhafte Ausführungsformen der Erfindung ergeben sich aus den abhängigen Patentansprüchen.

Bei einer bevorzugten Ausführungsform wird der zu sanierende Bereich in einem Rohr ermittelt und dies zur Festlegung der Markierung auf dem Schlauch verwendet. Mit anderen Worten wird der erforderliche Abstand der Markierung von wenigstens einem der Enden des Schlauches ermittelt, in dem die Position des zu sanierenden Bereichs im Rohr vorab, insbesondere durch eine Kamera, erfasst wird. Dies ermöglicht eine vereinfachte, zielgenaue Anordnung des Liners an der gewünschten zu sanierenden Stelle im Rohr.

Bevorzugt wird als Befestigungsmittel ein Klebstoff, besonders bevorzugt ein Cyanacrylat-Klebstoff, verwendet. Der Cyanacryat-Klebstoff kann ein sogenannter Sekundenkleber sein. Durch den Klebstoff ist der Liner mit dem Schlauch vorteilhaft derart verbindbar, dass der Liner an dem Schlauch, insbesondere beim Inversieren in ein Rohr, gehalten wird und/oder beim Entfernen des Schlauches aus einem/dem Rohr von dem Schlauch gelöst wird.

Bei einer weiteren bevorzugten Ausführungsform wird die Blase nur soweit expandiert, dass das Befestigungsmittel an der Umstülpungsstelle zwischen dem Liner und dem Schlauch einbringbar ist. Mit anderen Worten wird die Blase soweit radial expandiert, dass der Liner an dem Schlauch anliegend gehalten wird und noch das Befestigungsmittel zwischen dem Liner und dem Schlauch anbringbar, insbesondere einbringbar, ist. Der Anpressdruck der Blase gegen den Liner und somit den Schlauch wird bevorzugt so gewählt, dass noch das Befestigungsmittel an der Umstülpungsstelle zwischen den Liner und den Schlauch gelangen, insbesondere einfließen, kann. Dadurch wird die Einbringung des Befestigungsmittels erleichtert.

Zusätzlich oder alternativ wird die Blase nach dem Einbringen des Befestigungsmittels an der Umstülpungsstelle zwischen dem Liner und dem Schlauch weiter expandiert. Dadurch wird die Ausbildung einer festen Verbindung zwischen dem Liner und dem Schlauch begünstigt.

Vorzugsweise wird die Blase nach ausreichendem Festigkeitsaufbau des Befestigungsmittels, um den Liner am Schlauch zu halten, entfernt. Hier ist von Vorteil, dass die Blase nur solange wie nötig in dem Liner verweilt. Dadurch wird Zeit eingespart. Bei Verwendung eines Klebstoffs als Befestigungsmittel kann bspw. der Klebstoff teilweise oder vollständig ausgehärtet sein, wenn die Blase entfernt wird.

Besonders vorteilhaft ist es, wenn der Liner an der Umstülpungsstelle über den Schlauch etwas hervorsteht, da dies die Einbringung des Befestigungsmittels vereinfacht. Bevorzugt steht der Liner an der Umstülpungsstelle 0,5 cm bis 5 cm, besonders bevorzugt etwa 1 cm bis 2 cm, insbesondere etwa 1 cm, über den Schlauch vor.

Bei einer Ausführungsform wird der Schlauch in ein Rohr derart inversiert, insbesondere gestülpt, dass der Liner im Rohr angeordnet wird bzw. zu liegen kommt. Vorzugsweise wird der Liner durch eine Inversionsmaschine in das Rohr eingebracht. Der Liner ist vorzugsweise ein harzgetränkter, flexibler Faserschlauch. Besonders bevorzugt wird der Liner mittels Wärme, UV-Bestrahlung und/oder durch Umgebungstemperatur ausgehärtet.

Nachdem der Liner in dem Rohr befestigt ist bzw. angeordnet ist, wird der Schlauch aus dem Rohr entfernt. Vorzugsweise befindet sich dann lediglich der Liner in dem zu sanierenden Bereich des Rohres.

Im Folgenden werden anhand der Zeichnungen Ausführungsbeispiele der Erfindung näher erläutert. Funktionsgleiche Elemente sind in den verschiedenen Figuren mit den gleichen Bezugszeichen versehen.

Es zeigen,
- Fig. 1 bis 7: schematische Darstellungen von verschiedenen Schritten eines erfindungsgemäßen Verfahrens zur Befestigung eines Liners an bzw. in einem Schlauch; und
- Fig. 8: eine schematische Darstellung eines erfindungsgemäß an bzw. in einem Schlauch befestigten Liners in einer Einbauposition in einem Rohr.

Es sind nur die für das unmittelbare Verständnis der Erfindung wesentlichen Elemente gezeigt.

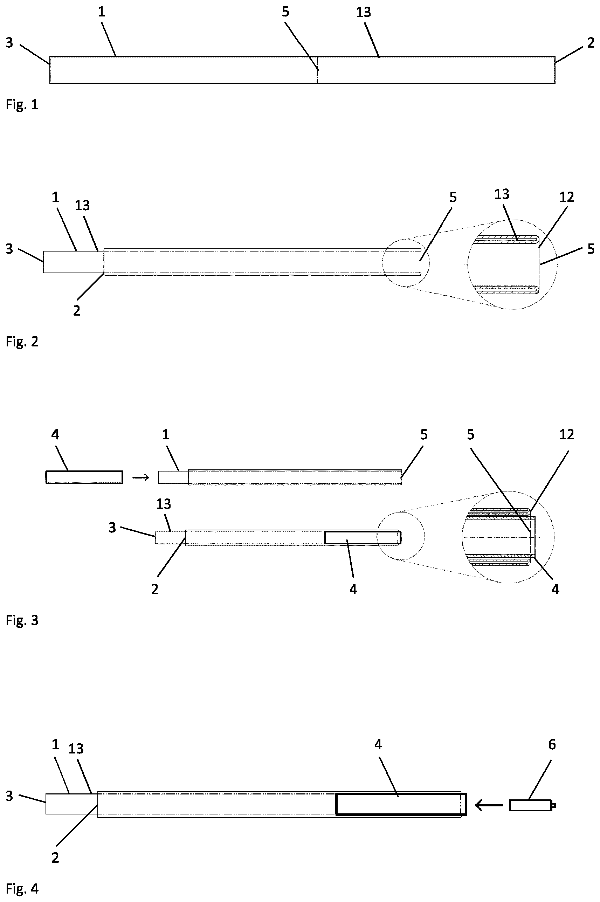

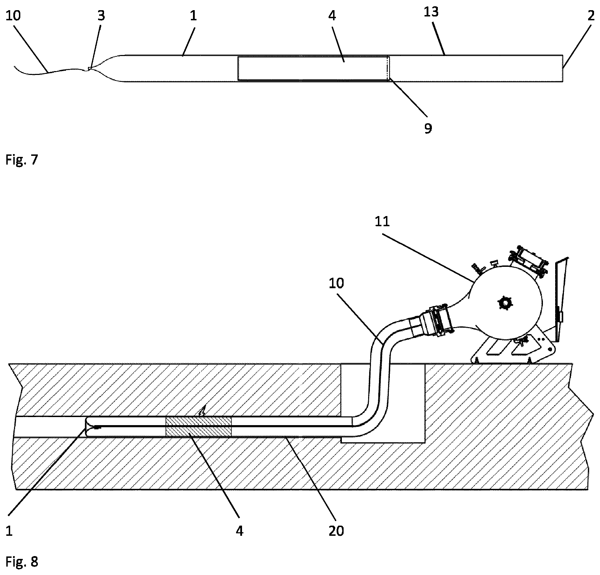

Fig. 1 bis 7 zeigen verschiedene Schritte eines erfindungsgemäßen Verfahrens zur Anbringung eines Liners 4 in einem Schlauch 1 und Fig. 8 die Anbringung und Positionierung des Liners 4 in einem Rohr 20.

Fig. 1 zeigt einen Schlauch 1, einen sogenannten Kalibrierschlauch, mit einem ersten Ende 2 und einem zweiten Ende 3. Der Kalibrierschlauch 1 ist ferner bevorzugt derart flexibel, dass dieser bis zu 90° in Bezug auf seine Längsachse biegbar ist. Mit anderen Worten ist der Kalibrierschlauch 1 vorzugsweise bis zu 90° bogengängig. Der Kalibrierschlauch 1 kann mit einem Epoxidharz- und/oder Polyesterharz-getränkten Liner 4 angewendet werden.

Der Kalibrierschlauch 1 ist vorzugsweise transparent und besteht aus einem Polyvinylchlorid-Material, insbesondere PVC-Material. Der Kalibrierschlauch 1 ist vorzugsweise bis maximal 50°C einsetzbar und kann bspw. in einer doppeltverstärkten Ausführung bis 100°C verwendet werden. Des Weiteren ist der Kalibrierschlauch 1 bis maximal 0,5 bar belastbar und weist ein Flächengewicht von 400g/m² auf. An dieser Stelle wird darauf hingewiesen, dass der Kalibrierschlauch 1 nicht auf die vorstehenden Werte eingeschränkt ist. Im Rahmen der Erfindung können alternativ auch andere Kalibrierschläuche 1 verwendet werden.

In einem Rohr 20, beispielsweise eine Rohrleitung oder ein Abwasserkanal, soll ein gewisser Abschnitt des Rohrs 20 mittels eines Liners 4 saniert werden. Solche Liner 4 bestehen vorzugsweise aus einem gewebten oder nichtgewebten Gewebe oder einem Vlies und sind vorzugsweise elastisch. Der Liner 4 besteht vorzugsweise aus einem längs- und querelastischen Textilschlauch, insbesondere Gewebeschlauch. Bevorzugt ist der Textilschlauch aus Polyethylenterephthalat, insbesondere PET, gebildet. Der Textilschlauch ist vorzugsweise mit einem Folienschlauch kaschiert, insbesondere ummantelt. Der Textilschlauch und/oder der Folienschlauch sind nahtlos ausgebildet. Ferner sind der Textilschlauch und der Folienschlauch bis zu 90° biegbar, d.h. bis 90° bogengängig.

Der Liner 4 kann mit einem Klebstoff versehen sein oder versehen werden, insbesondere mit einer aushärtbaren Kunstharzmischung, besonders bevorzugt einer aushärtbaren Epoxidharzmischung.

Die aushärtbare Kunstharzmischung ist bevorzugt ein Hobbock 2-Komponenten Epoxidharzsystem, das eine Harzkomponente, insbesondere EP 50 A - Harz, und eine Härterkomponente, insbesondere EP 50 B - Härter, umfasst und mit Füllstoffen angereichert (dixotropiert) ist. Es ist also von Vorteil, wenn die aushärtbare Kunstharzmischung ein lösungsmittelfreies Epoxidharz-System ist, das verbesserte Haftungseigenschaften in Bezug auf übliche Abwasserrohr-Werkstoffe sowie nassem Untergrund, insbesondere nasse Oberflächen aufweist.

Der Liner 4 wird unmittelbar vor dem Inversieren in das Rohr 20 mit dem Harz getränkt und auf die entsprechende Dicke gewalzt.

Durch Ausmessen des Rohres 20, besonders bevorzugt mit einer Kamera, wird ermittelt, wo der Liner 3 im Rohr 20 positioniert werden muss, damit der entsprechende Abschnitt saniert und repariert werden kann. Dort wo das eine Ende des Liners 4 im Rohr 20 und damit an dem in das Rohr 20 einzubringenden Kalibrierschlauch 1 zu liegen kommen muss, so dass der Liner 4 entsprechend des zu sanierenden Abschnitts positioniert ist, wird eine entsprechende Markierung 5 auf dem Kalibrierschlauch 1 angebracht, vorzugsweise mittels eines wasserfesten Filzstiftes. Dadurch wird festgelegt, wo der Liner 4 auf dem Kalibrierschlauch 1 zu liegen kommt und befestigt werden muss.

Gemäß Fig. 2 wird nun das erste Ende 2 des Schlauches 1 in Richtung des zweiten Endes 3 umgestülpt, bis der Schlauch 1 bis zur Markierung 5 auf dem Kalibrierschlauch 1 umgestülpt ist und sich bei der Markierung 5 eine Umstülpungsstelle 12 ergibt. Danach wird gemäß Fig. 3 der Liner 4 in den umgestülpten Schlauch 1 eingezogen und an der Umstülpungsstelle 12 angeordnet, derart, dass er später mit den entsprechenden Toleranzen an der zu sanierenden Stelle im Rohr 20 zu liegen kommt. Der Liner 4 kann vom zweiten Ende 3 oder von der Umstülpungsstelle 12 bei der Endposition 5 in Richtung des zweiten Endes 3 eingebracht werden. Der Liner 4 wird dann vorzugsweise so angeordnet, dass er etwas aus dem umgestülpten Schlauch 1 herausragt, bevorzugt etwa 0,5 cm bis 5 cm, besonders bevorzugt 1 cm bis 2 cm, insbesondere etwa 1 cm über die Umstülpungsstelle 12 vorsteht.

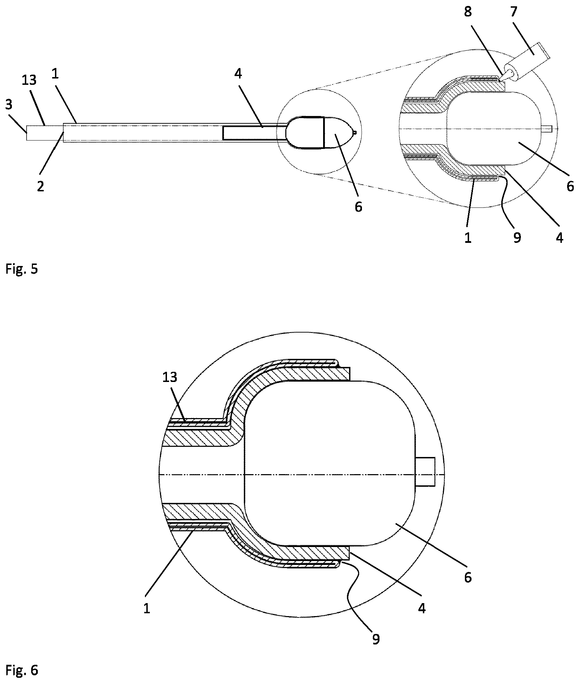

Entsprechend den Fig. 4 und 5 wird dann eine expandierbare Blase 6, zumindest teilweise, bevorzugt mehrheitlich, in den Liner 4 und den Schlauch 1 eingeführt. Als expandierbare Blase 6 kann jeglicher Gegenstand verwendet werden, der ausgedehnt werden kann, vorzugsweise ein ballonartiger Gegenstand der über Druckluft aufgeblasen werden kann.

Die Blase 6 wird nun soweit ausgedehnt, vorzugsweise aufgeblasen, dass der Liner 4 sich nicht mehr gegenüber dem Kalibrierschlauch 1 verschieben kann, aber nur soweit, dass es möglich ist ein Befestigungsmittel 7 zwischen dem Liner 4 und dem Schlauch 1 an der Umstülpungsstelle 12 einzubringen. Das Befestigungsmittel 7 wird vorzugsweise mittels eines Applikators 8, mit bevorzugt kegelförmiger Nase, eingebracht. Das Befestigungsmittel 7 ist vorzugsweise ein Klebstoff. Als Klebstoff kann ein handelsüblicher für die zu verklebenden Materialien geeigneter Klebstoff verwendet werden, beispielsweise ein Klebstoff auf Epoxidbasis, Schmelzklebstoffe, usw., vorzugsweise wird aber ein sogenannter Sekundenkleber, insbesondere ein Cyanacrylat-Klebstoff, verwendet. Es ist aber auch möglich, andere Befestigungsmittel 7 als Klebstoffe zu verwenden.

Das Befestigungsmittel 7 wird nun zumindest an zwei Punkten, bevorzugt jedoch über mindestens 50 Prozent des Linerumfanges, besonders bevorzugt über 80 Prozent des Linerumfanges, insbesondere durchgängig über den gesamten Linerumfang verklebt. Die Breite der so durch das Befestigungsmittel 7 erzeugten Verbindungsfläche 9 hat bevorzugt eine Breite von 0,1 mm bis 2 cm, besonders bevorzugt von 1 mm bis 1 cm.

Die Blase 6 kann dann vorzugsweise weiter aufgeblasen werden, damit der Liner 4 fest am Kalibrierschlauch 1 anliegt und eine gute Befestigung erfolgt.

Vorzugsweise wird die Blase 6 auf 1,5 bar, besonders bevorzugt auf ungefähr 2 bar aufgeblasen. Die Blase 6 kann aber je nach Ausführung auch stärker aufgeblasen werden. Fig. 6 ist bspw. die Blase 6 im expandierten Zustand gezeigt, wobei der Liner 4 und der Kalibrierschlauch 1 durch die Blase 6 radial erweitert sind.

Danach wird gewartet, bis das Befestigungsmittel 7 den Liner 4 mit genügend Festigkeit am Schlauch 1 hält. Vorzugsweise wird bei einem Klebstoff gewartet, bis eine genügende Aushärtung erreicht wird, besonders bevorzugt bis der Klebstoff fast vollständig ausgehärtet ist. Bei Verwendung eines üblichen Cyanacrylat-Klebstoffes wird etwa 30 Minuten zugewartet, damit der Liner 4 genügend am Kalibrierschlauch 1 hält. Bei anderen Klebstoffen wird diese Zeit entsprechend angepasst, bis eine genügende Festigkeit erzielt wird, so dass der Liner 4 am Schlauch 1 gehalten wird.

Dann wird der Druck aus der Blase 6, vorzugsweise möglichst langsam, abgelassen und die Blase 6 entfernt. Der Kalibrierschlauch 1 wird dann wieder zurückgestülpt, so dass der Liner 4 im Inneren des Schlauches 1 zu liegen kommt, bzw. positionsfest angeordnet ist, siehe Fig. 7.

Optional kann das zweite Ende 3 des Schlauches 1 oder das erste Ende 2, dann verschlossen werden, beispielsweise mit einem Knoten oder einer Schelle, und eine Zugeinrichtung 10 daran befestigt werden, beispielsweise ein Draht, eine Kette oder ein Seil, vorzugsweise ein Flachband. Vorzugsweise wird das zweite Ende 3 verknotet, wobei dann an diesem Knoten die Zugeinrichtung 10 angebracht wird. Dieser Schritt ist aber für die Erfindung nicht zwingend und wird für den Einbau des Liners 4 in das Rohr 20 verwendet.

In Fig. 8 ist schematisch dargestellt, wie der Liner 4 im Rohr 20 befestigt werden kann. Wie der Schlauch 1 in das Rohr 20 eingebracht wird, ist beispielsweise in DE 44 26 151 A1 im Detail beschrieben. Der Schlauch 1 kann beispielsweise mittels einer Inversionsmaschine 11 in das Rohr 20 inversiert, d.h. umgestülpt, werden, so dass der Liner 4 auf der Außenseite 13 des Schlauches 1 und im Rohr 20 an der richtigen, zu sanierenden, Stelle zu liegen kommt. Der Schlauch 1 kann mit Druck beaufschlagt werden, indem Luft oder ein Fluid in das Innere des Schlauchs 1 gepumpt wird.

Nun wird der Klebstoff, welcher im Liner 4 angeordnet ist, aushärten gelassen. Die Aushärtung kann durch einbringen von Wärme, vorzugsweise durch Einbringen von Dampf ins Innere des Schlauchs, beschleunigt werden. Dabei können Temperaturen von vorzugsweise bis zu 80°C, insbesondere von bis zu 110°C verwendet werden.

Nach dem Aushärten der Kunstharzmischung ist der Liner 4 an der Innenwandung des Rohrs 20 festgeklebt. Durch Bewegen der Zugeinrichtung 10 längs des Schlauchs 1 in Richtung auf dessen zweites Ende 3, in Richtung der Inversionsmaschine 11, kann der Kalibrierschlauch 1 aus dem Rohr 20 entfernt werden.

Selbstverständlich ist die Erfindung nicht auf das gezeigte und beschriebene Ausführungsbeispiel beschränkt. Der Liner 4 kann zu verschiedenen Zeitpunkten mit dem Harz getränkt werden.

### Bezugszeichenliste

- 1: Schlauch / Kalibrierschlauch
- 2: erstes Ende des Schlauches
- 3: zweites Ende des Schlauches
- 4: Liner
- 5: Markierung
- 6: Blase
- 7: Befestigungsmittel
- 8: Applikator
- 9: Verbindungsfläche
- 10: Zugeinrichtung
- 11: Inversionsmaschine
- 12: Umstülpungsstelle
- 13: Außenseite des Schlauchs
- 20: Rohr

## Patentansprüche

1. Verfahren zur Befestigung eines Liners (4) an einem Schlauch (1), insbesondere Kalibrierschlauch, umfassend:
- Bereitstellen des Schlauchs (1) mit einem ersten Ende (2) und einem gegenüberliegenden zweiten Ende (3);
- Anbringen einer Markierung (5) auf dem Schlauch (1);
- Umstülpen des Schlauches (1), indem das erste Ende (2) über die Außenseite (13) des Schlauchs (1) in Richtung des zweiten Endes (3) oder umgekehrt bis zur Markierung (5) umgestülpt wird, so dass eine Umstülpungsstelle (12) entsteht;
- Einbringen des Liners (4) in den Schlauch (1) und Anordnen des Liners an der Umstülpungsstelle (12) des Schlauches (1);
- Einbringen einer Blase (6) in den Liner (4) im Bereich der Umstülpungsstelle (12) und Expandieren der Blase (6);
- Einbringen eines Befestigungsmittels (7) an der Umstülpungsstelle (12) zwischen dem Liner (4) und dem Schlauch (1), so dass der Liner (4) am Schlauch (1) gehalten wird; und
- Entfernen der Blase (6) und Zurückstülpen des Schlauchs (1) in seine Ausgangsposition.

2. Verfahren nach Anspruch 1,
**dadurch gekennzeichnet, dass**
der zu sanierende Bereich in einem Rohr (20) ermittelt wird und dies zur Festlegung der Markierung (5) auf dem Schlauch (1) benutzt wird.

3. Verfahren nach Anspruch 1 oder 2,
**dadurch gekennzeichnet, dass**
das Befestigungsmittel ein Klebstoff, bevorzugt ein Cyanacrylat-Klebstoff ist.

4. Verfahren nach einem der vorhergehenden Ansprüche,
**dadurch gekennzeichnet, dass**
die Blase (6) nur soweit expandiert wird, dass das Befestigungsmittel (7) an der Umstülpungsstelle (12) zwischen dem Liner (4) und dem Schlauch (1) eingebracht werden kann, und/oder dass nach dem Einbringen des Befestigungsmittels (7) an der Umstülpungsstelle (12) zwischen dem Liner (4) und dem Schlauch (1) die Blase (6) weiter expandiert wird.

5. Verfahren nach einem der vorhergehenden Ansprüche,
**dadurch gekennzeichnet, dass**
die Blase (6) nach genügendem Festigkeitsaufbau des Befestigungsmittels (7), um den Liner (4) am Schlauch (1) zu halten, entfernt wird.

6. Verfahren nach einem der vorhergehenden Ansprüche,
**dadurch gekennzeichnet, dass**
der Liner (4) von der Umstülpungsstelle (12) hervorsteht, bevorzugt 0,5 cm bis 5 cm, besonders bevorzugt etwa 1 cm bis 2 cm, insbesondere etwa 1 cm.

7. Verfahren nach einem der vorhergehenden Ansprüche,
**dadurch gekennzeichnet, dass**
der Schlauch (1) in ein Rohr (20) inversiert, insbesondere gestülpt, wird, so dass der Liner (4) im Rohr (20) zu liegen kommt.

8. Verfahren nach Anspruch 7,
**dadurch gekennzeichnet, dass**
der Liner (4) mittels einer Inversionsmaschine in das Rohr (20) eingebracht wird.

9. Verfahren nach Anspruch 7 oder 8,
**dadurch gekennzeichnet, dass**
nach dem Befestigen des Liners (4) im Rohr (20) der Schlauch (1) entfernt wird.

## Claims

1. A process for fastening a liner (4) to a hose (1), in particular a calibration hose, comprising:
- providing the hose (1) having a first end (2) and an opposite second end (3);
- applying a marking (5) to the hose (1);
- inverting the hose (1) by turning the first end (2) over the outer side (13) of the hose (1) in the direction of the second end (3), or vice versa, up to the marking (5), so that a point of inversion (12) is formed;
- inserting the liner (4) into the hose (1) and positioning the liner at the point of inversion (12) of the hose (1);
- inserting a bladder (6) into the liner (4) in the region of the point of inversion (12) and expanding the bladder (6);
- inserting a fastening means (7) at the point of inversion (12) between the liner (4) and the hose (1), such that the liner (4) is retained on the hose (1); and
- removing the bladder (6) and reverting the hose (1) to its original position.

2. The process according to claim 1,
**characterized in that**
the region to be rehabilitated in a pipe (20) is determined, and this is used to determine the marking (5) on the hose (1).

3. The process according to claim 1 or 2,
**characterized in that**
the fastening means is an adhesive, preferably a cyanoacrylate adhesive.

4. The process according to any one of the preceding claims,
**characterized in that**
the bladder (6) is only expanded to such an extent that the fastening means (7) can be introduced at the point of inversion (12) between the liner (4) and the hose (1), and/or that the bladder (6) is further expanded after the fastening means (7) has been introduced at the point of inversion (12) between the liner (4) and the hose (1).

5. The process according to any one of the preceding claims,
**characterized in that**
the bladder (6) is removed after the fastening means (7) has built up sufficient strength to retain the liner (4) on the hose (1).

6. The process according to any one of the preceding claims,
**characterized in that**
the liner (4) protrudes from the point of inversion (12), preferably by 0.5 cm to 5 cm, particularly preferably by approx. 1 cm to 2 cm, particularly by approx. 1 cm.

7. The process according to any one of the preceding claims,
**characterized in that**
the hose (1) is inverted, in particular turned inside out, into a pipe (20) so that the liner (4) comes to rest in the pipe (20).

8. The process according to claim 7,
**characterized in that**
the liner (4) is inserted into the pipe (20) by means of an inversion machine.

9. The process according to claim 7 or 8,
**characterized in that**
the hose (1) is removed after the liner (4) has been fastened in the pipe (20).

## Revendications

1. Procédé de fixation d'une chemise (4) à un tuyau (1), en particulier un tuyau d'étalonnage, comprenant :
- la fourniture du tuyau (1) avec une première extrémité (2) et une seconde extrémité (3) opposée ;
- la mise en place d'un repère (5) sur le tuyau (1) ;
- le retournement du tuyau (1) par retournement de la première extrémité (2) sur la face extérieure (13) du tuyau (1) en direction de la seconde extrémité (3) ou inversement jusqu'au repère (5) de sorte qu'un point de retournement (12) est obtenu ;
- l'introduction de la chemise (4) dans le tuyau (1) et la disposition de la chemise au point de retournement (12) du tuyau (1) ;
- l'introduction d'une vessie (6) dans la chemise (4) dans la zone du point de retournement (12) et la dilatation de la vessie (6) ;
- l'introduction d'un moyen de fixation (7) au point de retournement (12) entre la chemise (4) et le tuyau (1) de sorte que la chemise (4) soit maintenue sur le tuyau (1) ; et
- le retrait de la vessie (6) et le fait de remettre le tuyau (1) dans sa position initiale.

2. Procédé selon la revendication 1,
**caractérisé en ce que**
la zone à réparer dans un tube (20) est déterminée et celle-ci est utilisée pour immobiliser le repère (5) sur le tuyau (1).

3. Procédé selon la revendication 1 ou 2,
**caractérisé en ce que**
le moyen de fixation est une colle, de préférence une colle à base de cyanoacrylate.

4. Procédé selon l'une quelconque des revendications précédentes,
**caractérisé en ce que**
la vessie (6) n'est dilatée que de manière à ce que le moyen de fixation (7) puisse être introduit au point de retournement (12) entre la chemise (4) et le tuyau (1), et/ou que la vessie (6) continue à être dilatée après l'introduction du moyen de fixation (7) au point de retournement (12) entre la chemise (4) et le tuyau (1).

5. Procédé selon l'une quelconque des revendications précédentes,
**caractérisé en ce que**
la vessie (6) est retirée après la formation d'une résistance suffisante du moyen de fixation (7) pour maintenir la chemise (4) sur le tuyau (1).

6. Procédé selon l'une quelconque des revendications précédentes,
**caractérisé en ce que**
la chemise (4) dépasse du point de retournement (12), de préférence de 0,5 cm à 5 cm, de manière particulièrement préférée d'environ 1 cm à 2 cm, en particulier d'environ 1 cm.

7. Procédé selon l'une quelconque des revendications précédentes,
**caractérisé en ce que**
le tuyau (1) est inversé dans un tube (20), en particulier retourné, de sorte que la chemise (4) vienne se placer dans le tube (20).

8. Procédé selon la revendication 7,
**caractérisé en ce que**
la chemise (4) est introduite dans le tube (20) au moyen d'une machine d'inversion.

9. Procédé selon la revendication 7 ou 8,
**caractérisé en ce que**
après la fixation de la chemise (4) dans le tube (20), le tuyau (1) est retiré.
